(19) Europäisches Patentamt
European Patent Office
Office européen des brevets

(11) **EP 4 333 177 A2**

(12) **EUROPÄISCHE PATENTANMELDUNG**

(43) Veröffentlichungstag:
**06.03.2024 Patentblatt 2024/10**

(21) Anmeldenummer: 23193930.7

(22) Anmeldetag: **29.08.2023**

(51) Internationale Patentklassifikation (IPC):
*H01M 50/24* (2021.01)   *H01M 50/276* (2021.01)
*H01M 50/278* (2021.01)   *H01M 50/282* (2021.01)

(52) Gemeinsame Patentklassifikation (CPC):
**H01M 50/24; H01M 50/1245; H01M 50/145;**
**H01M 50/276; H01M 50/278; H01M 50/282;**
H01M 50/224; H01M 50/227; H01M 50/231;
H01M 50/249; H01M 2220/20

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **01.09.2022   DE 102022122137**

(71) Anmelder: **ThyssenKrupp Steel Europe AG**
**47166 Duisburg (DE)**

(72) Erfinder:
• **Klauke, Peter**
**58239 Schwerte (DE)**
• **Kleinschmidt, Oliver**
**44137 Dortmund (DE)**
• **Lewe, Tobias**
**48147 Münster (DE)**

(74) Vertreter: **ThyssenKrupp Steel Europe AG**
**Patente/Patent Department**
**Kaiser-Wilhelm-Straße 100**
**47166 Duisburg (DE)**

(54) **BATTERIEKASTENDECKEL AUS THERMISCH ISOLIERENDEM STAHLSANDWICHMATERIAL**

(57)   Die Erfindung betrifft einen Batteriekastendeckel aus einem Verbundwerkstoff, insbesondere für Batteriekästen von Batterie-Elektrofahrzeuge (BEV) aufweisend:
- eine erste und eine zweite Schicht aus Stahl, und
- einer dazwischen angeordneten polymeren Schicht.

EP 4 333 177 A2

**Beschreibung**

Die Erfindung betrifft einen Batteriekastendeckel aus einem Verbundwerkstoff, insbesondere für Batteriekästen von Batterie-Elektrofahrzeugen (BEV).

Bei elektrobetriebenen Fahrzeugen, beispielsweise Elektroautos, sind viele Sicherheitsaspekte zu beachten. Aufgrund der durch die Kunden erwarteten Reichweite verändern sich auch die Ausmaße der eingesetzten Batterien. Üblicherweise werden Lithium-Ionen-Batterien in Elektroautos eingesetzt. Im Fall eines Brandes, mit Temperaturen bei mehr als 600°C, ist ein solcher jedoch ausschließlich durch die Feuerwehr zu bekämpfen, da Handfeuerlöscher mit Schaum oder Pulver nicht geeignet sind.

Deshalb müssen Batterien, insbesondere bei Unfällen, geschützt werden. Bei einem Aufprall können starke Kräfte auftreten, wodurch die Zellen der Batterie beschädigt werden und es zu einem Kurzschluss mit anschließender Kettenreaktion kommt, das sogenannte "Thermal Runaway" oder "thermisches Durchgehen". Dabei erhitzt sich die durch den Kurzschluss beschädigte Stelle so stark, dass sich umliegende Bereiche ebenfalls aufheizen und diese Reaktion sich innerhalb der Batterie fortpflanzt. So kann es innerhalb kurzer Zeit zu der Entwicklung hoher Temperaturen und letztendlich eines Brandes kommen.

Deshalb sind die Batterien in besonderen Batteriekästen gelagert. Schwachpunkt ist jedoch oft der Batteriekastendeckel bzw. die Anbringung des Batteriekastens am Unterboden des Fahrzeugs. Bisherige Maßnahmen basieren im Wesentlichen auf dem Einsatz spezieller Beschichtungen, Folien oder Decklagen zwischen Batteriekasten und Fahrzeugunterboden. Batteriekastendeckel aus Aluminium können bereits nach kurzer Zeit durchbrennen, so dass die Flammen ungehindert den Fahrzeugunterboden mit dem Unterbodenschutz erreichen. Auch einige Korrosionsbeschichtungen oder Lackierung können sich entzünden und starken Rauch entwickeln. Speziell der Unterbodenschutz ist leicht entzündbar und trägt so zu erheblicher Rauchentwicklung mit Eintrag in den Fahrzeuginnenraum bei.

Neue Brandschutzvorschriften (u.a. in China) verlangen, dass innerhalb von 5 Minuten vom Beginn des Thermal Runaway keine offene Flamme und/oder Rauch im Fahrzeuginnenraum auftritt. Die Energiefreisetzung in den Fahrzeuginnenraum muss so verlangsamt werden, dass die Fahrzeuginsassen genug Zeit haben, auch unter erschwerten Bedingungen das Fahrzeug verlassen zu können.

Angesichts des knappen Bauraums in diesem Bereich sind allerdings Lösungen attraktiv, die ohne weitere Aufbauten oder Mittel auskommen und die insbesondere in bestehende Prozesse ohne oder mit möglichst wenig Änderungen integriert werden können.

Der Erfindung liegt somit die Aufgabe zu Grunde, einen gegenüber dem Stand der Technik hinsichtlich Sicherheit, Verarbeitung und Gesundheit der Beteiligten in einem Schadensfall verbesserten Batteriekastendeckel bereitzustellen. Die Batterie soll durch den Batteriekasten und insbesondere durch den Deckel und den Schließmechanismus gegen Kälte und Hitze aber auch flüssigkeits- und gasdicht verschlossen werden. Der Batteriekasten und insbesondere der Deckel und gegebenenfalls der Schließmechanismus sollen aufgrund des Batteriegewichts ein hohes Lastaufnahmevermögen, bevorzugt in Kombination mit den weiteren Merkmalen, aufweisen.

Da der Batteriekasten bei elektrobetriebenen Fahrzeugen üblicherweise am Unterboden des Fahrzeugs, in der Nähe oder sogar unterhalb des Fahrgastraums angeordnet ist, muss der Batteriekasten und insbesondere der Batteriekastendeckel zusätzlich elektromagnetische Strahlung, dynamische oder statische elektrische und/oder dynamische oder statische magnetische Felder abschirmende Eigenschaften aufweisen und die elektromagnetische Verträglichkeit (EMV) gewährleisten. Aber nicht nur elektrischen Verbraucher, sondern auch die entsprechenden Zuleitungen, durch welche Ströme fließen, erzeugen Felder. Abhängig davon, ob sie mit Gleich- oder Wechselstrom betrieben werden, werden statische oder dynamische Felder erzeugt. In der modernen Energieversorgung und Automobilbranche, nimmt die Anzahl von elektronischen Geräten, insbesondere auch mit steigenden Betriebsfrequenzen, stetig zu. Durch den Trend zur Miniaturisierung ist eine Beeinträchtigung der elektrischen Geräte untereinander kaum noch durch räumliche Trennung oder konstruktive Änderungen zu erreichen. Um eine elektromagnetische Verträglichkeit (EMV) zwischen elektrischen Geräten oder Störquellen sicher stellen zu können, sind deshalb elektromagnetische Abschirmungen als wirksame Gegenmaßnahme einzusetzen. Des Weiteren muss auch die elektromagnetische Umweltverträglichkeit (EMVU) gewährleistet sein. So müssen sowohl Insassen von Elektrofahrzeugen als auch Passanten, geschützt sein. Dies ist auch beim Ladevorgang von Elektrofahrzeugen notwendig, insbesondere beim Einsatz von kontaktlosen Energieübertragungssystemen.

Gelöst wird diese Aufgabe durch einen Batteriekastendeckel mit den Merkmalen des Patentanspruchs 1.

Vorteilhafte Ausgestaltungen und Varianten der Erfindung ergeben sich aus den abhängigen Ansprüchen und der nachfolgenden Beschreibung.

Erfindungsgemäß besteht ein Batteriekastendeckel, insbesondere für einen Batteriekasten eines elektrisch angetriebenen Fahrzeugs oder eines Fahrzeugs mit Hybridantrieb, aus einem Werkstoffverbund, aufweisend:

- eine erste und eine zweite Schicht aus Stahl als Decklagen, und
- einer dazwischen angeordneten polymeren Schicht

oder bestehend daraus.

Die erste und zweite Schicht aus Stahl sind mithin Stahlbleche und werden im Sinne der Erfindung auch als Stahlschichten oder Metallblech bezeichnet.

Mit dem Batteriekastendeckel, bevorzugt als oberer Batteriekastendeckel, wird der Batteriekasten, also das Batteriegehäuse, verschlossen. Ein Batteriekastendeckel im Sinne der Erfindung ist ein fest aufliegender Verschluss für einen Batteriekasten, der so zugeschnitten und/oder geformt ist, dass er einen Batteriekasten flüssigkeits- und gasdicht einerseits verschließt. Andererseits ist gleichzeitig das Öffnen des mit diesem Deckel verschlossenen Batteriekastens ohne Beschädigung nur durch Bewegung, bevorzugt Entfernen eben dieses Deckels möglich.

In einer Variante weist der Batteriekastendeckel mithin zusätzlich zu dem Werkstoffverbund mindestens einen Verschluss auf, wie beispielsweise ein Scharnier, einen Spannverschluss, einen Riegel, einen Verschluss mit Bügel, einen Klickverschluss, Hebelverschluss, Magnetverschluss oder Bajonett-Verschluss.

Alternativ oder zusätzlich zu diesem mindestens einen Verschluss weist der Batteriekastendeckel Bohrungen, gegebenenfalls mit entsprechenden Verstärkungen für die Befestigung mittels Schrauben an dem Batteriekasten auf.

Der Batteriekastendeckel weist in einer weiteren Variante mindestens einen Flansch auf; dieser kann umlaufend sein. Alternativ dazu können auch mehrere Flansche vorhanden sein. Über miteinander korrespondierende Öffnungen in dem jeweiligen Flansch und im Batteriekasten ist der Deckel mittels Verschraubung mit dem Batteriekasten verbunden. Das Batteriegehäuse weist in einer Variante einen Unterfahrschutz auf. Dieser ist mit dem Gehäuse über einen Flansch lösbar, beispielsweise mittels einer Verschraubung befestigt.

In einer weiteren Variante weist der Batteriekastendeckel zusätzlich zu dem Verbundwerkstoff und gegebenenfalls zusätzlich zu dem Verschluss eine Dichtung auf.

Somit verschließt der Batteriekastendeckel den Batteriekasten flüssigkeits-und gasdicht. Ein Eindringen von Feuchtigkeit, beispielsweise als Wasserdampf, wird verhindert. Dadurch wird eine Langzeitdichtigkeit von mindestens 15 Jahren gewährleistet.

In einer Ausführung der Erfindung ist der Werkstoffverbund umformbar, insbesondere tiefziehfähig und/oder streckziehfähig. Im Sinne der Erfindung bedeutet umformbar, insbesondere tiefziehfähig und/oder streckziehfähig, dass diese Prozesse (also Umformen, Tiefziehen, Streckziehen) ohne eine Beschädigung des Werkstoffverbundes, insbesondere ohne eine Delamination der Schichten, durchführbar sind. "Ohne Delamination" bedeutet im Sinne der Erfindung, dass makroskopisch, also ohne optische Hilfsmittel zur Vergrößerung wie z.B. Lupe, insbesondere Mikroskop, mithin mit freiem Auge keine Beschädigung und/oder Abtrennung der Kunststoffschicht von dem Metallblech aufgrund des erfindungsgemäßen Verfahrens eintritt bzw. festgestellt werden kann.

Im Sinne der Erfindung bedeutet tiefziehfähig, dass die polymere Schicht beim Tiefziehen mit den Decklagen fließt und dabei keine Delamination auftritt. Für die Beurteilung der Tiefziehfähigkeit des Werkstoffverbundes kann im Sinne der Erfindung die Methode der Herstellung von Vierkantnäpfen (Vierkantproben) herangezogen werden. Ein erfindungsgemäß einzusetzender Werkstoffverbund erfüllt die Voraussetzungen, falls an den Vierkantproben keine makroskopischen Versagensstellen (Delamination) im Bereich der Beschichtung zu erkennen sind.

In einer Alternative ist der Werkstoffverbund streckziehfähig bzw. streckziehbar. Das bedeutet, dass bei der Erichsenprüfung bei Raumtemperatur und/oder bei höheren Temperaturen (zum Beispiel 100 °C) bis zur Versagensgrenze der Decklagen keine Auffälligkeiten, Beschädigungen, und/oder makroskopische Versagensstellen in der polymeren Schicht feststellbar sind.

Eine Alternative betrifft einen einzusetzenden Verbundwerkstoff der KTL-beschichtbar oder beschichtet und KTL-verträglich ist. Ebenso ist der erfindungsgemäß hergestellte Batteriekastendeckel KTL-beschichtbar oder beschichtet. Für die Beurteilung der KTL-Beschichtbarkeit des Verbundwerkstoffs oder Batteriekastendeckels wird im Sinne der Erfindung die Temperaturbeständigkeit insbesondere makroskopisch auf Delamination geprüft. Auch nach einer KTL-Beschichtung, die auf der Metalloberfläche aufgebracht wird, ist makroskopisch keine Delamination festzustellen. Durch die KTL-Beschichtbarkeit wird eine Integration in vorhandene Prozesse gewährleistet. Die polymere Schicht ist auch unter diesen, dem Fachmann bekannten Bedingungen stabil und kontaminiert nicht das KTL-Bad.

Die KTL-Beschichtung gewährleistet einerseits einen verbesserten Korrosionsschutz im Vergleich zu Batteriekastendeckel ohne diese Beschichtung. Bei einem schnellen Erhitzen, wie es im Falle eines Batteriebrandes auftreten kann, besteht jedoch andererseits die Gefahr, dass die KTL-Beschichtung verraucht. Ein solches schnelles Erhitzen wird jedoch durch die Polymere Schicht verhindert. Mithin ergibt sich durch die Kombination der Merkmale ein optimierter Batteriekastendeckel der auch erhöhten Temperaturen und einem plötzlichen Erhitzen standhält und Gefahren für Mensch und Umwelt durch Rauch verringert bzw. minimiert.

Eine Alternative betrifft einen einzusetzenden Verbundwerkstoff der Pulverlack-beschichtbar oder beschichtet und Pulverlack-verträglich ist. Ebenso ist der erfindungsgemäß hergestellte Batteriekastendeckel Pulverlack-beschichtbar oder beschichtet, insbesondere gemäß EN 15773 für feuer- oder diffusionsverzinkten Werkstücken aus Stahl. Für die Beurteilung der Pulverlack-Beschichtbarkeit des Verbundwerkstoffs oder Batteriekastendeckels wird im Sinne der Erfindung die Temperaturbeständigkeit insbesondere makroskopisch auf Delamination geprüft. Auch nach einer Pulverlack-Beschichtung, die auf der Metalloberfläche aufgebracht wird, ist makroskopisch keine Delamination festzustellen.

Durch die Pulverlack-Beschichtbarkeit wird eine Integration in vorhandene Prozesse gewährleistet. Die polymere Schicht ist auch unter diesen, dem Fachmann bekannten Bedingungen stabil; insbesondere bei der Vernetzung, wobei das Pulver auf die Werkstücke aufgebracht und bei Temperaturen von bis zu 250° in ihre Oberflächen eingebrannt wird.

Für eine dauerhafte Korrosionsbeständigkeit Komma wie beispielsweise in DIN 55633, sind ausreichende Schichtdicken notwendig. Da die Pulverlack-Beschichtung oft Poren aufweist, können Feuchtigkeit und Salze durch die Beschichtung diffundieren. Deshalb ist eine Schichtdicke von mindestens 100 Mikrometer, bevorzugt mindestens 110 Mikrometer, besonders bevorzugt mindestens 120 Mikrometer, insbesondere mindestens 130 Mikrometer und maximal 240 Mikrometer, bevorzugt maximal 200 Mikrometer, besonders bevorzugt maximal 180 Mikrometer, insbesondere maximal 160 Mikrometer. In einer Alternative werden 2 schichtaufbauten, bestehend aus einer Grundierung und einem Decklack eingesetzt, die eine höhere Korrosionsbeständigkeit aufweisen und eine Gesamt-Schichtdicke von 140 bis 200 Mikrometer, bevorzugt 160 bis 180 Mikrometer aufweisen.

Der Verbundwerkstoff und somit auch der Batteriekastendeckel weisen in einer Ausführung einen Schirmfaktor S(v) von 1,00 bis 120,00 dB, bevorzugt 10,00 bis 120,00 dB bei einem dynamischen, magnetischen Feld oder einem dynamischen, elektro-magnetischen Feld mit bei einer Frequenz v von 0,001 bis 1000 kHz, bevorzugt 0,1 bis 400 kHz, insbesondere bevorzugt 0,1 bis 200 kHz, auf, wobei der Schirmfaktor S(v) aus dem Quotient der Feldstärke gemessen am Ort der Senke mit bzw. ohne zwischen Senke und Quelle befindlichem abschirmendem Material bestimmt wird.

Weiter bevorzugt wird der Schirmfaktor S(v) nach der Gleichung der Formel (I)

$$S(v) = 20 \cdot log_{10}\left(\frac{I_1(v)U_{20}(v)}{U_2(v)I_{10}(v)}\right) dB \qquad (I),$$

bestimmt, wobei U2(v) die in der zweiten Spule induzierte Spannung, I1(v) der in der ersten Spule fließende Strom und I10(v) der Strom in der ersten Spule und U20(v) die Spannung in der zweiten Spule, jeweils ohne eingebrachte Probe, sind.

Der Schirmfaktor S(v) wird bevorzugt ermittelt, indem die Spannung U2(v) in einer zweiten Spule, die durch einen Strom I1(v) in einer ersten Spule induziert wird, gemessen wird, während sich eine Probe des abschirmenden monolithischen Materials zwischen der ersten und der zweiten Spule befindet und sich die Spulen in einem Abstand von höchstens 40 mm befinden.

Besonders bevorzugt wird der Schirmfaktor S(v) nach der Gleichung der Formel (I)

$$S(v) = 20 \cdot \log_{10}\left(\frac{I_1(v)U_{20}(v)}{U_2(v)I_{10}(v)}\right) dB \qquad (I),$$

bestimmt, wobei U2(v) die in der zweiten Spule induzierte Spannung, I1(v) der in der ersten Spule fließende Strom und I10(v) der Strom in der ersten Spule und U20(v) die Spannung in der zweiten Spule, jeweils ohne eingebrachte Probe, sind.

Weiter bevorzugt wird die Schirmdämpfung S(v) durch ein Verfahren bestimmt, mindestens umfassend die folgenden Schritte:

- Bereitstellen einer ersten Spule S1 mit einer ersten Induktivität L1, die mit einem ersten Signalgenerator SG1 und einer Einrichtung zur Strommessung I1(v) zu einem ersten Stromkreis verbunden ist,
- Bereitstellen einer zweiten Spule S2 mit einer zweiten Induktivität L2, die mit einer Einrichtung zur Spannungsmessung U2(v) zu einem zweiten Stromkreis verbunden ist, wobei die Spulen S1 und S2 räumlich so zueinander angeordnet sind, dass sie auf der gleichen Rotationsachse liegen und zwischen ihnen ein Freiraum ausgebildet wird,
- Einbringen einer zu vermessenden Probe in den Freiraum,
- Generierung einer sinusförmigen Spannung mit einer Frequenz v von 0,001 bis 1000 kHz durch den ersten Signalgenerator SG 1 in der ersten Spule S1,
- Messen der Stromstärke I1(v) im ersten Stromkreis,
- Messen der Spannung U2(v) im zweiten Stromkreis,
- Bestimmen des Schirmfaktors S(v) über die Gleichung der Formel (I)

$$S(v) = 20 \cdot log_{10}\left(\frac{I_1(v)U_{20}(v)}{U_2(v)I_{10}(v)}\right) dB \qquad (I),$$

wobei I10(v) der Strom im ersten Stromkreis und U20(v) die Spannung im zweiten Stromkreis, jeweils ohne eingebrachte Probe, sind.

Das erfindungsgemäß bevorzugte Verfahren zur Bestimmung des Schirmfaktors S(v) umfassend die Schritte (A) bis (G) wird im Detail in der Deutschen Patentanmeldung DE 10 2017 216 985.0 vom 25. September 2017 beschrieben.

Innerhalb des Batteriekastens ein intern nach Strommanagement vorliegt und starke Ströme auftreten, ist durch den erfindungsgemäßen Batteriekastendeckel der Innerraum von Elektrofahrzeugen sowohl während der Nutzung des Fahrzeugs als auch während des Ladevorgangs geschützt.

In einer Ausführung des Batteriekastendeckels ist die polymere Schicht ein viskoelastischer Klebstoff. Bevorzugt ist der Klebstoff ein silikonhaltiger Klebstoff, der insbesondere Polysiloxane aufweist oder im Wesentlichen daraus besteht. Dieser enthält in einer Alternative, insbesondere vor dem Aushärten, mindestens ein Silikonharz und gegebenenfalls mindestens ein Siloxangummi sowie gegebenenfalls mindestens ein Reaktionsaddukt aus mindestens einem Siloxangummi und mindestens einem Silikonharz.

Eine weitere Ausführung betrifft einen Batteriekastendeckel, der nicht brennbar und/oder hitzebeständig ist. Im Sinne der Erfindung ist ein Stoff nicht brennbar, falls er die strengen Kriterien der gem. IMO 2010 FTP Code book, annex 1, Part 1 erfüllt.

Ein Stoff ist hitzebeständig im Sinne der Erfindung, falls er bei hohen Temperaturen alle Anforderungen erfüllt. Der Batteriekastendeckel zeigt keine Veränderung der relevanten, also funktionellen Eigenschaften über einen Temperaturbereich von -80 °C bis 250 °C. Die polymere Schicht ist nicht brennbar und thermisch hochbelastbar mit einer Dauerbelastbarkeit von bis zu 400 °C und einer Schockbelastung von bis zu 800 °C.

Der Batteriekastendeckel ist halogenfrei und setzt aufgrund der Hitzebeständigkeit auch bei hohen Temperaturen keinen Rauch und keine toxischen Abgase frei gemäß IMO 2010 FTP Code book annex 1, Part 2. Außerdem erfolgt auch keine unangenehme Geruchsbildung, auch nicht unter Dauerbelastung.

Der Verbundwerkstoff und damit der Batteriekastendeckel ist körperschalldämpfend. Die Dämpfung wird im Sinne der Erfindung über den sogenannten Verlustfaktor ausgedrückt, der nach Norm EN ISO 6721 bestimmt wird. Der Batteriekastendeckel zeigt einen hohen Verlustfaktor über einem breiten Temperaturbereich, insbesondere einen Verlustfaktor von 0,01-1,0 gemessen bei 500 Hz bei Temperaturen zwischen -20 °C und 130 °C. Bevorzugt weist der Batteriekastendeckel einen Verlustfaktor von 0,04-0,5, gemessen bei 500 Hz, bei Temperaturen von -20 °C bis 80 °C, besonders bevorzugt ein Verlustfaktor von 0,07-0,3, insbesondere 0,1-0,2 bei Temperaturen von 5° bis 65 °C, auf.

In einer Ausführung enthält die polymere Schicht brandhemmende Additive und/oder Chemikalien. Als weitere Additive Kanal bevorzugt Schichtsilikate wie Glimmer-Partikel (Mica, Kalium-Aluminium-Silikaten) in der Polymerschicht vorliegen. Diese Partikel werden in unsilanisierter

Form oder mit Oberflächenmodifizierung z. B. mit Silanen oder silanbasierenden Substanzen, also in silanisierter Form eingesetzt.

Bevorzugt werden diese in einer Konzentration von 0,1 bis 20 Gew-% eingesetzt, besonders bevorzugt 5 % bis 10 % und führen so zu einer Verbesserung des Verlustfaktors, also der Schalldämmung von 10 bis 30 % bevorzugt 20 bis 25 %.

Durch die geringe Wärmeleitfähigkeit der Verbundwerkstoffe trägt das Material außerdem signifikant zu einem optimierten Thermomanagement bei. Die Batterie ist durch das Gehäusematerial automatisch besser gegen Kälte und Hitze abgeschirmt. Bei entsprechender Auslegung kann sogar komplett auf zusätzliche Isolation verzichtet werden.

Eine weitere Ausführung betrifft einen Batteriekastendeckel mit einer polymeren Schicht, welche ein Aerogel aufweist, insbesondere Aerogel in Form von Partikeln, die allerdings in einer Alternative eine geschlossene Schicht bilden können. Ein Aerogel ist als ein offenzelliger, mesoporöser, solider Schaum definiert, der aus einem Netzwerk von miteinander verbundenen Nanostrukturen besteht. Der Begriff Aerogel bezieht sich nicht auf eine bestimmte stoffliche Zusammensetzung, sondern auf eine geometrische Anordnung, in welcher eine Substanz vorliegen kann. Es handelt sich mithin um hochporöse, trockene Festkörper mit Porenvolumen von 95 -99,8%, die ein Netzwerk kolloidaler Teilchen mit Porengröße <1 bis 100 nm bilden. Als Stoffe werden Silica, Carbon, Metall-Oxid oder organische Polymere eingesetzt. Weitere Beschreibung und Definition des Begriffs Aerogel ist in der DE 19537821 (Abs. 1-5, 24) und DE 19834265 (Abs. 1-4, 6, sowie Aerogel hergestellt durch ein Verfahren gemäß Abs. 8) zu finden. Die oben beschriebenen Aerogele können in dem Batteriekastendeckel mit einer polymeren Schicht eingesetzt werden, bevorzugt wird ein Aerogel aus amorpher Kieselsäure, insbesondere als Granulat verwendet.

In einer Alternative ist das Aerogel in der polymeren Schicht dispergiert. In einer weiteren Alternative liegt das Aerogel als Schicht, wie zum Beispiel in der DE 19537821 beschrieben, in dem Batteriekastendeckel vor. Die Aerogel-Schicht ist zwischen Decklage und polymerer Schicht angeordnet oder auf einer oder beiden Seiten der von der polymeren Schicht abgewandten Seite der Decklage(n). Bevorzugt ist das Aerogel in der polymeren Schicht dispergiert oder als Schicht auf der Seite des Deckels bzw. der Decklage aufgetragen, die der Batterie und der polymeren Schicht abgewandt ist.

In einer weiteren Ausführung weist der Batteriekastendeckel Schichten aus Stahl mit jeweils einer Schichtdicke von mindestens 0,2 mm und maximal 1,5 mm, vorzugsweise von mindestens 0,25 mm und besonders bevorzugt von mindestens 0,3 mm bis zu einer maximalen Schichtdicke von bevorzugt 1,0 oder 0,75 mm, besonders bevorzugt 0,5 mm und eine polymere Schicht mit einer Schichtdicke von mindestens 0, 020 mm bis maximal 1,50 mm (mindestens 20 $\mu$m und maximal 1500 $\mu$m, insbesondere mindestens 0,02 mm, bevorzugt mindestens 0,025 mm, insbesondere mindestens 0,05 mm bis maximal insbesondere 0,5 mm, bevorzugt bis maximal 0,250 mm und insbesondere bis maximal 0,1 mm auf.

Die Schichten aus Stahl weisen in einer Alternative die gleiche Dicke auf, in einer anderen Alternative unterschiedliche Dicken.

Eine Ausführung der vorliegenden Erfindung betrifft einen Batteriekastendeckel, der eine gleichbleibende Materialstärke aufweist. Das bedeutet, dass der Werkstoffverbund, aus welchem der Batteriekastendeckel besteht, abgesehen von Verschluss, Flanschen, Bohrungen, Dichtungen oder Ähnliches wie oben beschrieben, eine gleichbleibende Dicke aufweist.

Ferner betrifft die Erfindung in einer Ausführung einen Batteriekastendeckel, wobei mindestens eine der Schichten aus Stahl zumindest außenseitig, in Bezug auf den Batteriekasten den der erfindungsgemäße Batteriekastendeckel abdeckt, eine Korrosionsschutzschicht aufweist, insbesondere auf Zink- und/oder Aluminium-Basis.

In einer Alternative weist der Batteriekastendeckel Schichten aus Stahl mit Beschichtungen auf, die aus einer Silizium enthaltenden Aluminiumlegierung bestehen. Geeignete Aluminiumlegierungen bestehen dabei typischerweise aus 0,1-15 Gew.-% Si bevorzugt mehr als 1,0 Gew-% Si, optional 2-4 Gew.-% Fe, optional bis zu 5 Gew.-% Alkali- oder Erdalkalimetalle, bevorzugt bis zu 1,0 Gew.-% Alkali- oder Erdalkalimetalle, und optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest aus Aluminium und unvermeidbaren Verunreinigungen. Bei einer bevorzugten Variante beträgt der Si-Gehalt 1,0-3,5 Gew.-% oder 7-12 Gew.-%, insbesondere 8-10 Gew.-%. Bei einer bevorzugten Variante umfasst der optionale Gehalt an Alkali- oder Erdalkalimetallen 0,1-1,0 Gew.-% Mg, insbesondere 0,1-0,7 Gew.-% Mg, bevorzugt 0,1-0,5 Gew.-% Mg. Weiterhin kann der optionale Gehalt an Alkali- oder Erdalkalimetallen insbesondere mindestens 0,0015 Gew.-% Ca, insbesondere mindestens 0,01 Gew.-% Ca, umfassen.

Ein solcher Korrosionsschutzüberzug wird bevorzugt durch Schmelztauchbeschichten des Stahlflachproduktes erzeugt. Beim Schmelztauchbeschichten diffundiert Eisen aus dem Stahlsubstrat in den flüssigen Überzug, so dass der Korrosionsschutzüberzug des Stahlflachproduktes beim Erstarren insbesondere eine Legierungsschicht und eine Al-Basisschicht aufweist. Die Legierungsschicht besteht aus 35-60 Gew.-% Fe, optionalen weiteren Bestandteilen, deren Gehalte in Summe auf höchstens 5,0 Gew.-% beschränkt sind, und als Rest Aluminium besteht. Die Al-Basisschicht besteht aus 1,0-15 Gew.-% Si, optional 2-4 Gew.-% Fe, optional bis zu 5,0 Gew.-% Alkali- oder Erdalkalimetalle, optional bis zu 10% Zn und optionalen weiteren Bestandteilen, deren Gehalte in Summe auf höchstens 2,0 Gew.-% beschränkt sind, und als Rest Aluminium.

Der Korrosionsschutzüberzug weist eine Dicke von 5-60 $\mu$m, insbesondere von 10 bis 40 $\mu$m auf. Das Auflagengewicht des Korrosionsschutzüberzuges beträgt insbesondere 30-360 g/m2 bei beidseitigen Korrosionsschutzüberzügen bzw. 15-180 g/m2 bei der einseitigen Variante. Bevorzugt beträgt das Auflagengewicht des Korrosionsschutzüberzuges 100-200 g/m2 bei beidseitigen Überzügen bzw. 50-100 g/m2 für einseitige Überzüge.

Gemäß einer Alternative besteht der Korrosionsschutzüberzug aus einer Zinklegierung umfassend neben Zink und unvermeidbaren Verunreinigungen zusätzliche Elemente wie Aluminium mit einem Gehalt zwischen 0,1 und 10,0 Gew.-% und/oder Magnesium mit einem Gehalt zwischen 0,1 und 10,0 Gew.-%. Als Verunreinigungen können Elemente aus der Gruppe Si, Sb, Pb, Ti, Ca, Mn, Sn, La, Ce und Cr einzeln oder in Kombination mit in Summe bis zu 0,5 Gew.-% im Korrosionsschutzüberzug enthalten sein. Stahlbleche respektive daraus hergestellte Stahlblechbauteile mit einem Korrosionsschutzüberzug auf Zinkbasis weisen einen sehr guten kathodischen Korrosionsschutz auf, welche seit Jahren im Automobilbau eingesetzt werden. Ist ein verbesserter Korrosionsschutz vorgesehen, weist der Überzug zusätzlich Magnesium mit einem Gehalt von mindestens 1,0 Gew.-%, insbesondere von mindestens 1,1 Gew.-%, vorzugsweise von mindestens 1,3 Gew.-% und von maximal 6,0 Gew.-%, insbesondere von maximal 5,0 Gew.-%, vorzugsweise von maximal 3,5 Gew.-% auf. Aluminium kann alternativ oder zusätzlich zu Magnesium mit einem Gehalt von mindestens 1,0 Gew.-%, insbesondere von mindestens 1,3 Gew.-%, vorzugsweise von mindestens 1,6 Gew.-% und von maximal 6,0 Gew.-%, insbesondere von maximal 5,0 Gew. %, vorzugsweise von maximal 4,0 Gew.-% vorhanden sein.

Insbesondere zur Einstellung einer vorgegebenen Dicke des ZM-Überzugs, welche im festen Zustand zwischen 1 $\mu$m und 60 $\mu$m pro Seite betragen kann, wird die noch im flüssigen Zustand auf dem Stahlband applizierte Schmelze abgestreift, dadurch, dass nach dem Verlassen des Schmelzbads das mit flüssiger Schmelze beschichtete Stahlband durch eine Abstreifvorrichtung hindurchgeführt wird, welche Mittel aufweist, beispielsweise Düsen, insbesondere Schlitzdüsen, welche beidseitig auf das Stahlband mit einem gasförmigen Abstreifmedium zum Abstreifen der flüssigen Schmelze einwirken. Dadurch kann ein asymmetrischer Überzug erreicht werden, also unterschiedliche Auflage auf beiden Seiten. Die Einstellung der Dicke des ZM-Überzugs kann insbesondere zwischen mindestens 4 $\mu$m, vorzugsweise mindestens 5 $\mu$m und maximal 58 $\mu$m, vorzugsweise zwischen 5 und maximal 55 $\mu$m unabhängig voneinander jeweils pro Seite, erfolgen.

In einer besonderen Ausgestaltung beträgt die Dicke des Überzugs mindestens 1,0 $\mu$m, bevorzugt mindestens 2 $\mu$m, besonders bevorzugt mindestens 3,0 $\mu$m, insbesondere mindestens 5,0 $\mu$m und maximal 25 $\mu$m, bevorzugt maximal 20 $\mu$m und besonders bevorzugt maximal 15 $\mu$m, insbesondere maximal 10 $\mu$m unabhängig voneinander jeweils pro Seite betragen.

Gemäß einer Alternative besteht der Korrosionsschutzüberzug aus einer Zinklegierung umfassend neben Zink und unvermeidbaren Verunreinigungen zusätzlich Nickel, gemäß ISO 15726:2009-02, mit einem Gehalt zwischen 5,0 und 25,0 Gew.-%. Der Überzug weist Nickel in einem Gehalt von mindestens 10,0 Gew.-%, insbesondere von mindestens 11,0 Gew.-%, vorzugsweise von mindestens 12,0 Gew.-% und von maximal 20,0 Gew.-%, insbesondere von maximal 18,0 Gew.-%, vorzugsweise von maximal 16,0 Gew.-% auf. In einer Ausgestaltung beträgt die Dicke des Überzugs mindestens 2,0 $\mu$m, bevorzugt mindestens 6,0 $\mu$m, besonders bevorzugt mindestens 8,0 $\mu$m, insbesondere mindestens 10 $\mu$m und maximal 25 $\mu$m, bevorzugt maximal 20 $\mu$m und besonders bevorzugt maximal 15 $\mu$m, insbesondere maximal 12 $\mu$m unabhängig voneinander jeweils pro Seite betragen. In einer Alternative ist der Zink-Nickel-Überzug passiviert.

Das im Werkstoffverbund erfindungsgemäß einzusetzende Metallblech weist zumindest im Bereich der polymeren Schicht eine die Haftung der polymeren Schicht verbessernde Oberfläche auf. Die Verbesserung bezieht sich auf eine Kontrolle, bei der ein identisches Metallblech betrifft, welches keiner Behandlung zur die Haftung der polymeren Schicht verbessernden Oberfläche unterzogen wurde. Um eine solche Oberfläche zu erhalten, kann das Metallblech einer entsprechenden Oberflächenbehandlung unterworfen werden. Eine modifizierte Oberfläche im Sinne der Erfindung ist das Ergebnis einer Oberflächenbehandlung. Bei der Oberflächenbehandlung kann es sich um eine Plasmabehandlung, Plasmabeschichtung, Koronabehandlung oder das Auftragen einer Schicht handeln. Das Auftragen einer Schicht kann mit jedem dem Fachmann bekannten und für die Schicht und für die Oberfläche des Metallblechs geeigneten Verfahren durchgeführt werden, bevorzugt mittels eines Verfahrens ausgewählt aus der Gruppe enthaltend oder bestehend aus Gasphasenabscheidung, Spritzen, Lackieren, Tauchlackierung, Schmelztauchen, Schlitzdüsenbeschichten, Rakelbeschichten, Tauchbeschichten, Sprühbeschichten, Walzbeschichten, Galvanisieren, thermisches Spritzen, Coil Coating, Dip Coating und Pulverbeschichten, bevorzugt Coil-Coating- Dip- oder Drop-coating-Verfahren, besonders bevorzugt Coil-Coating-Verfahren, beispielsweise mittels einer Applikation mit Hilfe von Walzen als Coaterwalzen und/oder als Abquetschwalzen.

Aufgrund der oben genannten Oberflächenbehandlung oder Auftragen einer Schicht ist die modifizierte Oberfläche, also die Grenzfläche des Metallblechs oder Kontaktfläche, eine die Haftung der polymeren Schicht verbessernde Oberfläche. Die Oberfläche des Metallblechs liegt so modifiziert vor, dass sie im Vergleich zu einer Oberfläche ohne diese Modifikation, eine bessere Haftung der polymeren Schicht gewährleistet.

In einer Alternative ist die modifizierte Oberfläche eine gereinigte Oberfläche. Die Reinigung erfolgt mit einem dem Fachmann bekannten Verfahren.

In einer weiteren Alternative ist die modifizierte Oberfläche als Grenzfläche (Kontaktfläche) des Metallblechs, die auch als Grenzschicht ausgebildet sein kann, nachweisbar. Bei der modifizierten Oberfläche handelt es sich in dieser Alternative nicht um eine Metalloberfläche bzw. Phase die in allen Eigenschaften identisch zu jener des nicht behandelten Metallblechs ist. Vielmehr liegt eine dem Metallblech zuzuordnende, nachweisbare Grenzfläche auf der Metallblech vor, welche aufgrund einer durchgeführten Modifikation andere Eigenschaften aufweist als eine nichtbehandelte Metallblechoberfläche. Eine Reinigung, also das Entfernen von Verunreinigungen, entspricht in dieser Alternative nicht einer Verbesserung der Oberfläche, da durch die Reinigung keine Modifikation der Grenzfläche stattfindet und somit auch keine nachweisbare, modifizierte Oberfläche vorliegt.

In einer Ausführung wird auf das Metallblech, unmittelbar oder auf eine wie oben beschriebene modifizierte Oberfläche, eine die Haftung der polymeren Schicht verbessernde Schicht aufgetragen. Bevorzugt wird dazu das Metallblech zumindest in einem Kontaktbereich zur polymeren Schicht mit einem Haftvermittler oder mit einer wässerigen Konversionszusammensetzung in Kontakt gebracht, die Zink, Mangan und Phosphorpentoxid enthält. Das Auftragen der wässrigen Konversionszusammensetzung kann mit dem Fachmann bekannten Verfahren durchgeführt werden, bevorzugt mittels eines Verfahrens ausgewählt aus der Gruppe enthaltend oder bestehend aus Spritzen, Schlitzdüsenbeschichten, Rakelbeschichten, Tauchbeschichten, Sprühbeschichten, Walzbeschichten und Coil-Coating. Anschließend wird der hiermit hergestellte Flüssigkeitsfilm aufgetrocknet, sodass eine Schicht ausgebildet wird. In einer Alternative wird, in einem wie oben beschriebenen Verfahren, eine nasschemische Konversionszusammensetzung für alle gängigen Metallsubstrate in einer dünnen haftvermittelnden Konversionsbeschichtung aufgebracht. In einer Alternative wird das Metallblech mit einer wässerigen Konversionszusammensetzung in Kontakt gebracht wird, die enthält: 0,5 bis 20 g/L Zink, 0,01 bis 10 g/L Mangan, 0,01 bis 10 g/L Aluminium, 0,01 bis 1 g/L Chrom(III), 0,01 bis 5 g/L Eisen(II), 0,01 bis 5 g/L Eisen(III) oder/und 0,01 bis 5 g/L Magnesium, 0 oder 0,01 bis 5 g/L der Summe an Nickel oder/und Kobalt, 0 oder 0,01 bis 5 g/L der Summe an Molybdän, Tantal, Vanadium oder/und Wolfram, 2 bis 100 g/L P2O5, die 2,68 bis 133,8 g/L PO4 entsprechen, 0,1 bis 10 g/L Polyacrylsäure, jedoch nicht mehr als 25 % des Gehalts der Zusammensetzung an P2O5 in g/L, und 0 oder 0,01 bis 3 g/L Silan, jedoch nicht mehr als 25 % des Gehalts der Zusammensetzung an P2O5 in g/L.

In einer weiteren Alternative ist die Konversionszusammensetzung Chrom-frei, die Chrom-Konzentration liegt mithin unterhalb der Nachweisgrenze oder ist so gering, dass sie die in der Stahlherstellung und/oder Beschichtung von Blechen gültige Standards im Bereich Health, Sa-fety & Environment (HSE) erfüllt. Die Konversionsbeschichtungsverfahren kann alternativ ohne einen Aktivierungsschritt mit einem kolloidalen Titanphosphat oder mit einem Oberflächenkonditionierungsmittel (Surface Conditioner) auf Basis von Phosphatpartikeln erfolgen. Die wässerige Konversionszusammensetzung kann vorzugsweise auch 0,001 bis 20 g/L oder 0,2 bis 10 g/L an mindestens einem weiteren wasserlöslichen und/oder wasserdispergierbaren organischen Polymer/Copolymer neben Polyacrylsäure enthalten. In einer weiteren Alternative ist die resultierende Konversionsschicht vorzugsweise völlig röntgenamorph oder röntgenamorph mit geringen kristallinen Anteilen. Die Konversionsbeschichtung kann in vielen Ausführungsvarianten weitgehend oder gänzlich amorph ausgebildet sein und weder Partikel, noch feinste Hohlräume mit bloßem Auge erkennbar zeigen.

Eine Ausführung der vorliegenden Erfindung betrifft einen Batteriekastendeckel, wobei der Werkstoffverbund eine spezifische Wärmekapazität bei 250 °C von mindestens 0,60, bevorzugt mindestens 0,70, besonders bevorzugt mindestens 0,80 insbesondere mindestens 0,83 und maximal 1,30, bevorzugt maximal 1,10, besonders bevorzugt maximal 0,90, insbesondere maximal 0,85 angegeben in J/(g*K) aufweist. In einer Alternative beträgt die spezifische Wärmekapazität des Werkstoffverbundes 0,830 J/(g*K) bei 250 °C für einen Werkstoffverbund aus 2 Schichten aus Metall mit einer Dicke von jeweils 0,3 mm und einer polymeren Schicht mit einer Dicke von 0,05 mm und gegebenenfalls auf den Außenflächen der Schichten aus Metall (als Innenfläche wird die der polymeren Schicht zugewandte Fläche bezeichnet) KTL beschichtet.

In einer weiteren Ausführung betrifft die Erfindung einen Batteriekastendeckel, wobei der Werkstoffverbund eine Wärmeleitfähigkeit bei 250 °C von mindestens 1,00, bevorzugt mindestens 1,50, besonders bevorzugt mindestens 2,00, insbesondere mindestens 2,20 und maximal 7,00, bevorzugt maximal 5,00, besonders bevorzugt maximal 4,00, insbesondere maximal 3,00 angegeben in W/(m*K) aufweist. In einer Alternative beträgt Wärmeleitfähigkeit des Werkstoffverbundes 2,560 W/(m*K) bei 250 °C für einen Werkstoffverbund aus 2 Schichten aus Metall mit einer Dicke von jeweils 0,3 mm und einer polymeren Schicht mit einer Dicke von 0,05 mm und gegebenenfalls auf den Außenflächen der Schichten aus Metall (als Innenfläche wird die der polymeren Schicht zugewandte Fläche bezeichnet) KTL beschichtet.

In einer Alternative werden die spezifische Wärmekapazität und die Wärmeleitfähigkeit wie folgt bestimmt: ein erfindungsgemäß einzusetzender Verbundwerkstoff wird vor die Öffnung eines Laborofens gestellt und dieser aufgeheizt. Ein Holzrahmen dient zur Minimierung des Thermikeffektes. Mittels einer Thermokamera (Flir SC 660) wird die Temperatur sowohl innerhalb des Ofens durch eine Bohrung, als auch unmittelbar auf dem Verbundwerkstoff und auf einer Hilfsfläche eines schwarzen Isolierbands gemessen. Zur Auswertung wird die Laborsoftware Flir Research IR eingesetzt.

Die spezifische Wärmekapazität und die Wärmeleitfähigkeit belegen die hohe Isolationswirkung des erfindungsgemäßen Batteriekastendeckels. Einerseits wird dadurch ein Schutz vor Explosionen gewährleistet, da Schichten aus Stahl eine besondere Festigkeit bei einer Überdruckausbildung innerhalb des Batteriekastens im Schadensfall haben und darüber hinaus auch die notwendige Elastizität besitzen. Die eingesetzte polymere Schicht bläht sich im Schadensfall nicht auf, sondern wird bei hohen Temperaturen über eine längere Zeit in SiO2 umgewandelt. Diese SiO2 bzw. Sandpartikel verstärken die Isolationswirkung. Durch diese Isolationswirkung wird auch eine Rauchentwicklung durch ein gegebenenfalls auf der Außenfläche aufgebrachtes KTL lag bei hohen Temperaturen vermieden bzw. zumindest hinausgezögert.

Im Vergleich zu monolithischen Batteriekastendeckeln derselben Dicken führt der erfindungsgemäß einzusetzende Verbundwerkstoff zu einer Gewichtseinsparung von 14-46 kg/m2. Dadurch wird der Energieverbrauch reduziert und die Umweltverträglichkeit erhöht.

Da die polymere Schicht für die Umwelt unkritisch ist, kann beim Recycling der Verbundwerkstoff wie monolithischer Stahl verarbeitet und geschmolzen werden.

Insbesondere weist der Batteriekastendeckel und/oder der Verbundwerkstoff eines oder mehrere der oben beschriebenen Merkmale auf, oder jede beliebige Kombination von Merkmalen.

Der erfindungsgemäße Batteriekastendeckel bietet neben einer ausgezeichneten Umformbarkeit und körperschalldämpfenden Eigenschaften durch seine hohe Temperaturbelastbarkeit nicht nur eine erhöhte Sicherheit. Viel mehr lässt sich die Verarbeitung und der Einbau in bestehende Prozesse problemlos integrieren.

Gegenstand der Erfindung ist ferner die Verwendung eines Werkstoffverbundes aufweisend:

- eine erste und eine zweite Schicht aus Stahl, und
- einer dazwischen angeordneten polymeren Schicht

als Batteriekastendeckel, bzw. eines Werkstoffverbundes wie oben beschrieben, insbesondere aufweisend jede beliebige Kombination oben beschriebener Merkmale

Gegenstand ist des Weiteren auch die Verwendung eines oben beschriebenen Werkstoffverbundes als Einhausung für Lithium-basierte Batterien.

Weiterer Gegenstand der Erfindung ist ein elektrisch angetriebenes Fahrzeug oder Fahrzeug mit Hybridantrieb, insbesondere ein Personenfahrzeug, Nutzfahrzeug, Sonderfahrzeug, vorzugsweise Bus, Omnibus, ein Gleis-gebundenes Fahrzeug, vorzugsweise Straßenbahn oder personenbefördernder Waggon, aufweisend einen Batteriekastendeckel wie oben beschrieben.

**Patentansprüche**

1. Batteriekastendeckel, insbesondere für einen Batteriekasten eines elektrisch angetriebenen Fahrzeugs oder eines Fahrzeugs mit Hybridantrieb, bestehend aus einem Werkstoffverbund, aufweisend:

   - eine erste und eine zweite Schicht aus Stahl, und
   - einer dazwischen angeordneten polymeren Schicht.

2. Batteriekastendeckel nach Anspruch 1, wobei der Werkstoffverbund umformbar, insbesondere tiefziehfähig ist.

3. Batteriekastendeckel nach einem der vorhergehenden Ansprüche, wobei die polymere Schicht ein viskoelastischer Klebstoff ist.

4. Batteriekastendeckel nach Anspruch 3, wobei der silikonhaltige Klebstoff Polysiloxane aufweist.

5. Batteriekastendeckel nach einem der vorhergehenden Ansprüche, wobei die Schichten aus Stahl jeweils eine Schichtdicke von mindestens 0,2 mm und maximal 1,5 mm und die polymere Schicht eine Schichtdicke von mindestens 20 $\mu$m und maximal 1500 $\mu$m aufweisen.

6. Batteriekastendeckel nach einem der vorhergehenden Ansprüche, wobei Werkstoffverbund KTL-beschichtbar und/oder Pulverlack-beschichtbar ist.

7. Batteriekastendeckel nach einem der vorhergehenden Ansprüche, wobei mindestens eine der Schichten aus Stahl zumindest außenseitig eine Korrosionsschutzschicht aufweist, insbesondere auf Zink- und/oder Aluminium-Basis.

8. Batteriekastendeckel nach Anspruch 7, wobei die Korrosionsschutzschicht aus einer Zinklegierung umfassend neben Zink und unvermeidbaren Verunreinigungen zusätzliche Elemente wie Nickel, Aluminium und/oder Magnesium oder daraus besteht.

9. Batteriekastendeckel nach Anspruch 8, wobei die Korrosionsschutzschicht Aluminium mit einem Gehalt zwischen 0,1 und 10,0 Gew.-% und/oder Magnesium mit einem Gehalt zwischen 0,1 und 10,0 Gew.-% enthält.

10. Batteriekastendeckel nach einem der vorhergehenden Ansprüche, wobei mindestens eine der Schichten aus Stahl zumindest im Bereich der polymeren Schicht eine die Haftung der polymeren Schicht verbessernde Oberfläche aufweist.

11. Batteriekastendeckel nach einem der vorhergehenden Ansprüche, wobei der Werkstoffverbund eine spezifische Wärmekapazität von 0,60-1,40 J/g*K bei 250 °C aufweist

12. Batteriekastendeckel nach einem der vorhergehenden Ansprüche, wobei der Werkstoffverbund eine Wärmeleitfähigkeit von 1,00-7,005 W/(m*K) bei 250 °C aufweist.

13. Batteriekastendeckel nach einem der vorhergehenden Ansprüche, wobei der Werkstoffverbund einen Schirmfaktor S(v) von 1,00 bis 120,00 dB bei einem dynamischen, magnetischen Feld oder einem dynamischen, elektro-magnetischen Feld mit bei einer Frequenz v von 0,001 bis 1000 kHz aufweist, wobei der Schirmfaktor S(v) aus dem Quotient der Feldstärke gemessen am Ort der Senke mit bzw. ohne zwischen Senke und Quelle befindlichem abschirmendem Material bestimmt wird.

14. Elektrisch angetriebenes Fahrzeug oder Fahrzeug mit Hybridantrieb, insbesondere ein Personenfahrzeug, Nutzfahrzeug, Sonderfahrzeug, vorzugsweise Bus, Omnibus, ein Gleis-gebundenes Fahrzeug, vorzugsweise Straßenbahn oder personenbefördernder Waggon, aufweisend einen Batteriekastendeckel nach einem der Ansprüche 1 bis 13.

15. Verwendung eines Werkstoffverbundes aufweisend:

    - eine erste und eine zweite Schicht aus Stahl, und
    - einer dazwischen angeordneten polymeren Schicht

als Batteriekastendeckel.

**IN DER BESCHREIBUNG AUFGEFÜHRTE DOKUMENTE**

**In der Beschreibung aufgeführte Patentdokumente**

- DE 102017216985
- DE 19537821
- DE 19834265